# FASCICULE DE BREVET EUROPEEN

(11) **EP 4 049 936 B1**
(45) Date de publication et mention de la délivrance du brevet: **26.06.2024**
(21) Numéro de dépôt: 22159033.4
(22) Date de dépôt: 25.02.2022
(51) Int. Cl.: B64F 5/50, F01D 25/28, F01D 5/00

(54) **SYSTÈME DE CHARIOT MOBILE ET PROCÉDÉ DE MISE EN OEUVRE D'UN SYSTÈME DE CHARIOT MOBILE**
SYSTEM MIT EINEM BEWEGLICHEN SCHLITTEN UND VERFAHREN ZUR ANWENDUNG EINES SOLCHEN SYSTEMS MIT BEWEGLICHEM SCHLITTEN
MOBILE CARRIAGE SYSTEM AND METHOD FOR IMPLEMENTING A MOBILE CARRIAGE SYSTEM

(30) Priorité: 26.02.2021 FR 2101924
(43) Date de publication de la demande: 31.08.2022
(73) Titulaire: Excent France, 31770 Colomiers (FR)
(72) Inventeur: LARROQUE, Clémence, 32000 Auch (FR); BONNEAU, Alexandre, 31700 Blagnac (FR)
(74) Mandataire: BARRE LAFORGUE

(56) Documents cités:
- DE-A1-102015 214 667
- DE-U1- 9 203 607
- FR-A1- 2 848 528
- US-A1- 2007 110 552
- US-A1- 2007 189 884
- US-B1- 10 472 095

## Description

### [Domaine technique]

L'invention concerne un système de chariot mobile pour un élément d'aéronef tel qu'un moteur d'avion. L'invention concerne également un procédé de mise en oeuvre d'un système de chariot mobile pour un tel élément d'aéronef.

### [État de la technique antérieure]

L'aéronautique civile affichait une croissance importante ces dernières années et continue à jouir d'une dynamique favorable. L'augmentation de la disponibilité des avions est un enjeu important pour les avionneurs.

Tous les acteurs du secteur (avionneurs, compagnies aériennes, motoristes, prestataires de services de maintenance aéronautique...) ont intérêt à réduire les coûts d'exploitation et les durées pendant lesquelles les avions doivent rester au sol.

Les moteurs d'avion sont des équipements très fréquemment montés et démontés, notamment pour des opérations de maintenance. Ces opérations nécessitent des systèmes de manutention adaptés.

Pour ce faire, on connaît des bâtis de transport pour moteur d'avion susceptibles d'être utilisés dans toutes les phases de vie du moteur, notamment l'assemblage, le transport, le levage, la maintenance, le stockage ou encore la pose et dépose sur avion. On connaît en particulier des bâtis de transport comprenant un berceau pouvant recevoir un moteur et une base roulante recevant ledit berceau, en particulier pour les phases de roulage et de transport routier ou aérien. Il existe ainsi un très grand nombre de bâtis de transport distincts spécifiques à chaque type de moteur d'avion, à l'utilisateur ainsi qu'à la phase d'utilisation du moteur. En outre, chaque bâti de transport peut nécessiter divers accessoires supplémentaires afin de permettre leur manutention. Ceci entraîne des surcoûts d'équipement ainsi que des surcoûts liés à la surface nécessaire au stockage de ces nombreux accessoires.

Le document US 2007/110552 A1 décrit un module en U pour monter un train d'atterrissage d'un avion. Toutefois, il n'existe pas de solution efficace pour les moteurs d'avions gros porteurs et long-courrier à fuselage dit large pour lesquels les contraintes liées au poids des moteurs (plusieurs tonnes, voire plus de 10 tonnes) et à l'encombrement de ceux-ci et des avions sont accrues.

Le document DE10 2015 214667 A1 porte sur un système pour assembler et démonter un moteur d'avion et comporte deux modules mobiles.

L'invention vise à pallier l'ensemble de ces inconvénients.

L'invention vise à proposer un système de chariot mobile adapté pour pouvoir déplacer un élément d'aéronef de grande taille (plusieurs mètres de longueur et plusieurs mètres de largeur et/ou de diamètre) et de masse importante, pouvant notamment aller jusqu'à 20 tonnes (20000 kg) voire plus.

L'invention vise également à proposer un tel système de chariot mobile présentant lui-même un encombrement réduit.

L'invention vise également à proposer un tel système de chariot mobile procurant une sécurité d'utilisation parfaite.

L'invention vise également à proposer un procédé de mise en oeuvre d'un tel système de chariot mobile sûr et dont la réalisation est aisée et permet un gain de temps important.

### [Exposé de l'invention]

L'invention concerne un système de chariot mobile pour déplacer un élément d'aéronef qui est un moteur d'avion, ledit système comprend :
- un premier module mobile et un deuxième module mobile, chaque module mobile s'étendant principalement selon un axe longitudinal et comprenant :
   ∘ un châssis équipé d'au moins trois roues,
   ∘ un dispositif de levage adapté pour pouvoir déplacer ledit élément d'aéronef au moins selon une direction verticale, chaque dispositif de levage comprend au moins une fourche qui s'étend selon une direction transversale, orthogonale audit axe longitudinal,
- au moins un bras de liaison adapté pour pouvoir solidariser entre eux le châssis dudit premier module et le châssis dudit deuxième module.

Le système de chariot mobile se caractérise en ce que le premier module mobile et le second module mobile sont adaptés pour pouvoir être pilotés et déplacés indépendamment l'un de l'autre et simultanément de façon coordonnée entre eux lorsqu'ils sont solidarisés entre eux à l'aide d'au moins un bras de liaison, et le dispositif de levage de chaque module mobile étant adapté pour pouvoir déplacer l'élément d'aéronef verticalement et par une inclinaison par rapport à un plan de levage orthogonal à ladite direction verticale.

Les fourches de chaque dispositif de levage permettent de charger, transporter, lever et mais aussi positionner précisément en hauteur un élément d'aéronef. Par exemple, les fourches peuvent charger l'élément d'aéronef au travers d'un bâtit de transport. Un système de chariot mobile selon l'invention permet ainsi la manutention, en particulier le déplacement au sol et le levage, d'un tel élément d'aéronef sans nécessiter d'adaptation particulière ni d'accessoires généralement utilisés pour s'adapter à chaque situation et notamment à tous les bâtis de transport et moteurs d'aéronefs de diverses dimensions, tout en présentant un encombrement réduit, chaque module mobile pouvant également être piloté et déplacé indépendamment l'un de l'autre ou de façon coordonnée lorsqu'ils sont solidarisés entre eux à l'aide d'au moins un bras de liaison permettant une liaison mécanique et de communication physique fiable entre ledit premier module mobile et ledit deuxième module mobile.

Ainsi dans des modes de réalisation, le système de chariot mobile comprend au moins un bras de liaison comprenant un câble de communication adapté pour permettre une transmission de données entre le premier module mobile et le deuxième module mobile.

En particulier, une telle liaison physique de communication grâce audit câble de communication dudit bras de liaison évite tout risque de rupture momentanée de la liaison de communication qui pourrait s'avérer dangereuse pour les opérateurs au sol ainsi que pour l'élément d'aéronef en cours de manipulation.

L'axe longitudinal de chaque module mobile est aussi en général l'axe selon lequel chaque module mobile selon l'invention présente la plus grande dimension hors tout. La largeur d'un module mobile selon l'invention est une dimension de ce dernier selon un axe horizontal, dit axe transversal, orthogonal audit axe longitudinal. De même, une orientation vers l'avant et une orientation vers l'arrière peuvent être définies selon ledit axe longitudinal, le système selon l'invention présentant un sens principal, dit sens avant, d'avancement selon ledit axe longitudinal, le système selon l'invention étant toutefois adapté pour pouvoir se déplacer dans les deux sens selon ledit axe longitudinal. Compte tenu dudit sens avant, l'une des extrémités longitudinales de chaque module mobile est désignée extrémité avant, l'autre extrémité longitudinale opposée étant désignée extrémité arrière.

Dans tout le texte on entend par direction verticale, toute direction orthogonale à un plan de déplacement principal dudit système au sol selon les directions longitudinales et transversales. De ce fait, dans des modes de réalisation, la direction transversale de chaque fourche peut être une direction horizontale.

Selon certains modes de réalisation, lorsque le premier module mobile et le deuxième module mobile sont solidarisés entre eux à l'aide dudit au moins un bras de liaison, le système de chariot mobile est adapté pour recevoir ledit élément d'aéronef tel qu'un moteur d'avion entre le premier module mobile et le deuxième module mobile. Autrement dit, l'élément d'aéronef susceptible d'être manipulé et déplacé (au sol ou par levage) par un système de chariot selon l'invention est destiné à être disposé entre le premier module mobile et le deuxième module mobile. En particulier, lorsqu'il s'agit d'un moteur d'aéronef, celui-ci peut être disposé de façon à ce que l'axe longitudinal dudit moteur d'aéronef soit orienté parallèlement ou perpendiculairement à l'axe longitudinal de chacun des modules mobiles.

Chaque bras de liaison peut être fixé de façon permanente par l'une de ses extrémités longitudinales à l'un dudit premier module mobile ou dudit deuxième module mobile, l'autre extrémité longitudinale libre dudit bras de liaison étant uniquement fixée à l'autre dudit premier module mobile ou dudit deuxième module mobile lorsque le premier module mobile et le deuxième module mobile sont associés afin de coopérer l'un avec l'autre lors de la manipulation ou du déplacement dudit élément d'aéronef. Il est également possible de prévoir que chaque bras de liaison soit assemblé au même moment au premier module mobile et au deuxième module mobile lorsque ceux-ci sont associés afin de coopérer l'un avec l'autre, c'est-à-dire sans que chaque bras de liaison ne soit fixé de façon permanente au premier module mobile ou au deuxième module mobile.

Selon certains modes de réalisation, chaque bras de liaison s'étend selon une direction transversale, orthogonale à ladite direction longitudinale dudit module mobile. Ceci correspond en particulier au moins à la configuration de chaque bras de liaison lorsque le premier module mobile et le deuxième module mobile coopèrent l'un avec l'autre en vue de manipuler et/ou déplacer un élément d'aéronef. D'autre part, rien n'empêche de prévoir que chaque bras de liaison puisse présenter une configuration distincte, dite configuration repliée, présentant un encombrement réduit dans laquelle puisse être disposé chaque bras de liaison lorsque le premier module mobile et le deuxième module mobile ne sont pas solidarisés l'un avec l'autre. Dans une telle configuration repliée chaque bras de liaison peut par exemple être télescopique et/ou pivotable de façon à pouvoir s'étendre selon une direction parallèle à la direction longitudinale dudit module mobile auquel il est fixé.

Selon certains modes de réalisation, chaque bras de liaison peut présenter la forme d'une barre, d'une tige ou encore d'un profilé. Chaque barre ou tige peut présenter une section droite transversale circulaire ou polygonale. En particulier, selon certains modes de réalisation, une telle barre est formée d'au moins un matériau choisi dans le groupe formé des matériaux composites, des matériaux métalliques, des matériaux polymères et des matériaux céramiques. Il peut en particulier s'agir d'une barre creuse métallique, d'une barre de section droite transversale rectangulaire (barre plate ou profilé).

Selon certains modes de réalisation, chaque bras de liaison présente une extrémité fixée à au moins un module mobile. En particulier, un système selon l'invention comprend deux bras de liaison, un premier bras de liaison étant fixé au châssis dudit premier module mobile et un deuxième bras de liaison étant fixé au châssis dudit deuxième module mobile.

Les extrémités de chaque bras de liaison peuvent être assemblées audit premier module mobile et audit deuxième module mobile par tout type de liaison non nulle, et en particulier par tout type de liaison comportant au moins trois degrés de liaison en translation. De cette façon, ceci permet la transmission d'efforts entre chaque bras de liaison et au moins un desdits premier module mobile et deuxième module mobile selon les trois axes de translation. En particulier, chaque bras de liaison est lié à au moins un desdits premier module mobile et deuxième module mobile (via au moins une extrémité de fixation) par une liaison choisie dans le groupe formé des liaisons complètes (sans aucun degré de liberté, également appelées encastrements), des liaisons pivot (dont l'axe est orthogonal à la direction selon laquelle s'étend le bras de liaison) et des liaisons rotule (liaisons à point central pouvant être assimilées à trois liaisons pivot d'axes perpendiculaires). Selon un mode de réalisation particulièrement avantageux, chaque bras de liaison est lié à au moins un desdits premier module mobile et deuxième module mobile par une liaison pivot.

Selon certains modes de réalisation, chaque bras de liaison présente une raideur et une résistance en compression et/ou en traction et/ou en cisaillement apte à augmenter la raideur du système de chariot mobile selon l'invention vis-à-vis des déplacements en translation ou en rotation du premier module mobile et du deuxième module mobile l'un par rapport à l'autre. En particulier, chaque bras de liaison est adapté pour présenter une résistance en traction et/ou une résistance en compression au moins entre deux points du châssis de chaque module mobile auxquels il est fixé.

Lesdits bras de liaison permettent de solidariser les deux modules mobiles entre eux et notamment de maintenir un écartement constant entre eux, notamment en évitant leur écartement sous le poids de l'élément d'aéronef. Ils permettent donc de maintenir un positionnement relatif de l'un par rapport à l'autre fixe.

Dans des modes de réalisation, au moins le premier module mobile peut comporter, d'une part, un câble de liaison configuré pour être connecté au deuxième module mobile, et d'autre part, un moyen de gestion du stockage et du déploiement du câble de liaison. Le câble de liaison permet de maintenir l'écartement entre les deux modules mobiles tout en ménageant un plus grand espace entre les deux modules mobiles. Ainsi, le système de chariot mobile présente une plus grande adaptabilité et permet de charger des éléments d'aéronef de plus grandes dimensions.

Selon certains modes de réalisation, le châssis de chaque module mobile est équipé d'au moins deux roues motorisées.

Selon certains modes de réalisation, chaque roue peut être orientable jusqu'à 360° par rapport à l'axe longitudinal, en particulier orientable selon un angle allant jusqu'à 270° par rapport à l'axe longitudinal (correspondant à la direction 0°-180°). De cette façon, chaque module mobile est omnidirectionnel permettant au système de chariot mobile selon l'invention de pouvoir se déplacer dans toutes les directions.

Chaque module mobile comprend une source d'énergie. Selon certains modes de réalisation, chaque module mobile comprend au moins un accumulateur d'énergie électrique, par exemple une batterie électrique (rechargeable ou non).

Chaque module mobile peut être piloté seul, c'est-à-dire indépendamment de l'autre module mobile, en particulier lorsqu'aucun élément d'aéronef n'est chargé sur ledit mobile, ou de façon coordonnée avec l'autre module mobile, en particulier lors de la manipulation d'un élément d'aéronef à l'aide du système selon l'invention.

Selon certains modes de réalisation, chaque dispositif de levage comprend au moins un vérin de levage. Chaque vérin de levage peut être hydraulique ou électrique. En particulier, chaque dispositif de levage comprend deux vérins de levage et des montants verticaux. Chaque dispositif de levage peut par exemple être un dispositif de levage à ciseaux croisés actionnés à l'aide desdits vérins de levage. Tout autre type de dispositif de levage peut également être utilisé.

Selon certains modes de réalisation, chaque module mobile peut comprendre un rail qui s'étend longitudinalement, chaque fourche étant fixée à un rail via un dispositif de fixation, chaque fourche et chaque dispositif de fixation sont montés coulissants en translation le long du rail. Le réglage de l'écartement entre les fourches confère une grande flexibilité au système de chariot mobile en lui permettant de charger toutes tailles d'élément d'aéronef.

Dans des modes de réalisation, chaque fourche peut comporter au moins un patin d'appui et un système d'ajustement de l'orientation spatiale du patin d'appui selon au moins un axe. Les patins et le système d'ajustement permettent d'ajuster la position de la face d'appui afin d'assurer une meilleure prise de chargement de l'élément d'aéronef.

Selon certains modes de réalisation, ledit système comprend un dispositif de verrouillage de chaque fourche. En particulier, ledit système comprend un dispositif de verrouillage de chaque fourche dudit premier module mobile avec ledit deuxième module mobile et un dispositif de verrouillage de chaque fourche dudit deuxième module mobile avec ledit premier module mobile. Il peut s'agir de fourches qui se verrouillent entre elles (via leurs extrémités libres) ou de fourches dont l'extrémité libre se verrouille à un élément de verrouillage prévu sur l'autre module mobile (distinct de celui auquel est fixé ladite fourche).

Selon certains modes de réalisation, ledit système comprend en outre un dispositif additionnel de réglage de la hauteur des fourches permettant d'offrir un jeu supplémentaire selon l'axe vertical, en particulier lors des opérations de pose et/ou dépose d'un élément d'aéronef. En particulier, chaque dispositif de fixation au rail peut comprendre un basculeur de butée qui est actionné à l'aide d'un levier de butée. Le basculeur de butée offre un certain jeu supplémentaire de réglage de la position des fourches selon l'axe vertical ce qui est particulièrement utile lors des opérations de pose et/ou dépose de l'élément d'aéronef.

Selon certains modes de réalisation, chaque module mobile comprend au moins deux vérins, dits vérins de souplesse, chaque vérin de souplesse étant associé à au moins un plateau à billes porteuses de façon à permettre au moins une translation dudit élément d'aéronef dans un plan horizontal, sensiblement orthogonal à ladite direction verticale, par rapport à chaque module mobile. Ceci permet, une fois chaque vérin de souplesse déployé, de libérer la charge formée par l'élément d'aéronef (et un bâti de transport dudit élément d'aéronef, le cas échéant), donnant l'impression de flotter comme sur un coussin d'air, en permettant à un nombre réduit d'opérateurs d'exercer manuellement des efforts sur ledit élément d'aéronef (et sur un bâti de transport le cas échéant) afin d'aligner un dispositif de fixation dudit élément d'aéronef audit aéronef (par exemple des trous de platines d'un moteur d'aéronef avec des goupilles d'un mât d'aéronef). Chaque vérin de souplesse peut être hydraulique ou électrique. Chaque vérin de souplesse permet également de régler l'assiette et l'inclinaison de chaque module mobile, et ainsi de manipuler le plus précisément possible l'élément d'aéronef à déplacer.

Ceci peut également être réalisé en utilisant un autre système de sustentation à la place de chaque plateau à billes, par exemple un coussin d'air (couche d'air sous pression) ou encore à l'aide d'un palier hydrostatique ou d'un palier hydrodynamique.

Selon certains modes de réalisation particulièrement avantageux, chaque dispositif de levage comprend trois vérins de souplesse, deux vérins étant disposés à chacune des extrémités longitudinales dudit module mobile et le troisième vérin étant disposé au niveau d'une portion centrale du châssis dudit module mobile.

Un système de chariot mobile selon l'invention est adapté pour pouvoir déplacer tout type d'élément encombrant, en particulier un élément d'aéronef tel qu'un moteur d'avion, un train d'atterrissage ou encore une partie de fuselage.

Un système de chariot mobile selon l'invention est adapté pour pouvoir déplacer ledit élément d'aéronef à l'aide d'un bâti de transport recevant ledit élément d'aéronef, un système de chariot mobile selon l'invention étant alors adapté pour déplacer l'ensemble formé par un bâti de transport et un élément d'aéronef, par exemple un moteur d'avion. Un système de chariot mobile selon l'invention est adapté pour pouvoir coopérer avec tout type de bâti de transport de moteur d'avion.

L'invention concerne également un procédé de mise en oeuvre d'un tel système de chariot mobile. En particulier, l'invention concerne un procédé de mise en oeuvre d'un système de chariot mobile pour élément d'aéronef, ledit système de chariot mobile comprenant un premier module mobile et un deuxième module mobile, chaque module mobile s'étendant principalement selon un axe longitudinal et comprenant un châssis équipé d'au moins trois roues,
procédé dans lequel :
- on solidarise entre eux le châssis dudit premier module et le châssis dudit deuxième module mobile à l'aide d'au moins un bras de liaison, puis
- on pilote ledit premier module mobile et ledit deuxième module mobile de façon coordonnée entre eux,
- on déplace ledit élément d'aéronef au moins selon une direction verticale à l'aide d'un dispositif de levage dudit module mobile.

Selon l'invention, préalablement à l'étape de solidarisation du châssis du premier module et du châssis du deuxième module mobile à l'aide dudit au moins un bras de liaison :
- on pilote ledit premier module mobile de façon à insérer au moins une fourche dudit premier module mobile dans des fourreaux d'un bâti de transport de réception adapté pour pouvoir recevoir ledit élément d'aéronef,
- on pilote ledit deuxième module mobile de façon à insérer au moins une fourche dudit deuxième module mobile dans lesdits fourreaux dudit bâti de transport de réception.

Selon certains modes de réalisation, après avoir déplacé ledit élément d'aéronef au moins selon une direction verticale à l'aide dudit dispositif de levage, on déploie chaque vérin de souplesse de façon à permettre au moins une translation dudit élément d'aéronef dans un plan horizontal, sensiblement orthogonal à ladite direction verticale, par rapport à chaque module mobile.

Rien n'exclut cependant d'utiliser également le dispositif de levage après le déploiement des vérins de souplesse.

Selon certains modes de réalisation, après avoir inséré les fourches de chacun desdits premier et deuxième modules mobiles dans lesdits fourreaux dudit bâti de transport dudit élément d'aéronef, on verrouille chaque fourche dudit premier module mobile avec ledit deuxième module mobile et on verrouille chaque fourche dudit deuxième module mobile avec ledit premier module mobile.

### [Description des dessins]

D'autres buts, caractéristiques et avantages de l'invention apparaîtront à la lecture de la description détaillée suivante de certains modes de réalisation possibles, donnée à titre non limitatif et qui se réfère aux figures annexées dans lesquelles :
[Fig. 1] représente une vue en perspective d'un module mobile d'un système selon l'invention ;
[Fig. 2] représente une vue en perspective de dessous d'un module mobile d'un système selon l'invention ;
[Fig. 3] représente une vue de dessus d'un système selon l'invention,
[Fig. 4] représente une vue en perspective d'un système selon l'invention avec un bâti de transport et un moteur d'aéronef,
[Fig. 5] représente une vue en coupe transversale d'un détail d'un système selon l'invention,
[Fig. 6] représente une vue en coupe transversale d'un détail d'un système selon l'invention,
[Fig. 7] représente une vue en coupe transversale d'un détail d'un système selon l'invention, dont les fourches sont levées dans une position haute,
[Fig. 8] représente une vue en coupe d'un détail d'un système selon l'invention.
[Fig. 9] représente une vue en coupe d'un bâti de transport dans lequel une fourche de chaque module mobile est engagée conformément à un mode de réalisation de l'invention.
[Fig. 10] représente une vue en perspective d'une fourche du mode de réalisation de la figure 9.
[Fig. 11] représente une vue avant d'un mode de réalisation conforme du système de chariot mobile de l'invention.

### [Description des modes de réalisation]

Dans les figures illustratives de l'invention, données uniquement à titre non limitatif, les proportions ne sont pas nécessairement respectées, et ceci uniquement aux fins de clarté de l'exposé.

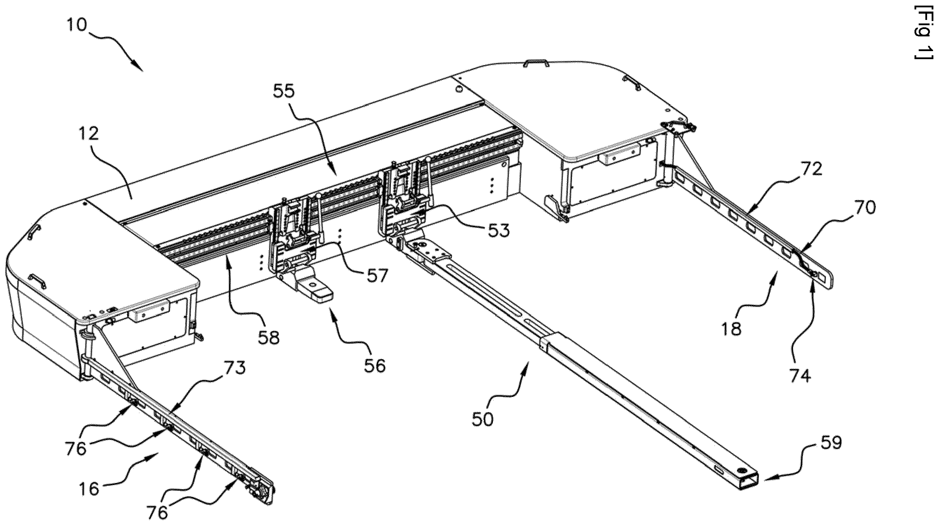

Le système 1 de chariot mobile illustré aux figures 1 à 8 comprend un premier module mobile 10 et un deuxième module mobile 20. Chaque module mobile 10, 20 s'étend principalement selon un axe longitudinal et comprend un châssis 12, 22 équipé de roues ainsi qu'un dispositif de levage 55 adapté pour pouvoir déplacer un élément d'aéronef tel qu'un moteur d'avion selon au moins selon une direction verticale.

Le premier module mobile 10 et le deuxième module mobile 20 sont adaptés pour pouvoir être pilotés de façon coordonnée entre eux.

Chaque module mobile 10, 20 peut être piloté par un opérateur via une télécommande sans fil. Le premier module mobile et le deuxième module mobile peuvent être pilotés indépendamment l'un de l'autre ou simultanément, en particulier lors de la manipulation d'un élément d'aéronef à l'aide du système selon l'invention. C'est-à-dire que chaque module mobile 10, 20 peut être piloté seul, indépendamment de l'autre module mobile (en particulier lorsqu'aucun élément d'aéronef n'est chargé sur ledit mobile, mais par exemple pour le déplacement du module mobile vers l'élément d'aéronef à manipuler ou vers une zone de stockage après une manipulation).

Chaque module mobile 10, 20 est indépendant en énergie, chaque module mobile peut par exemple comprendre au moins une batterie électrique.

Le système 1 de chariot mobile comprend au moins un bras de liaison 16, 17 adapté pour pouvoir solidariser entre eux le châssis du premier module et le châssis du deuxième module. Dans le mode de réalisation illustré chaque module mobile comprend un bras de liaison, le premier module mobile 10 comprenant un premier bras de liaison 16 et le deuxième module mobile 20 comprenant un deuxième bras de liaison 17.

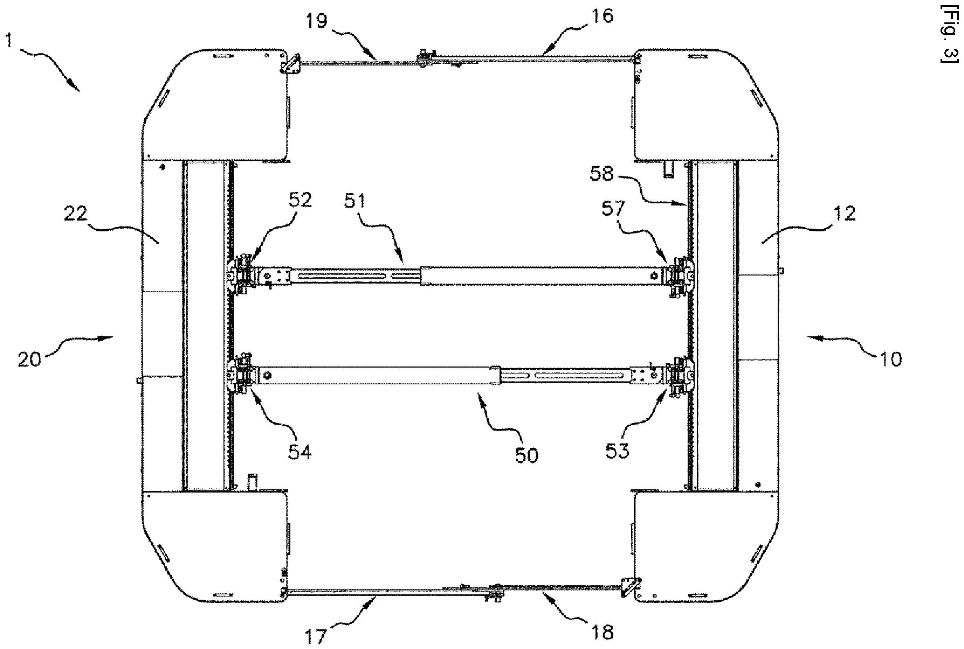

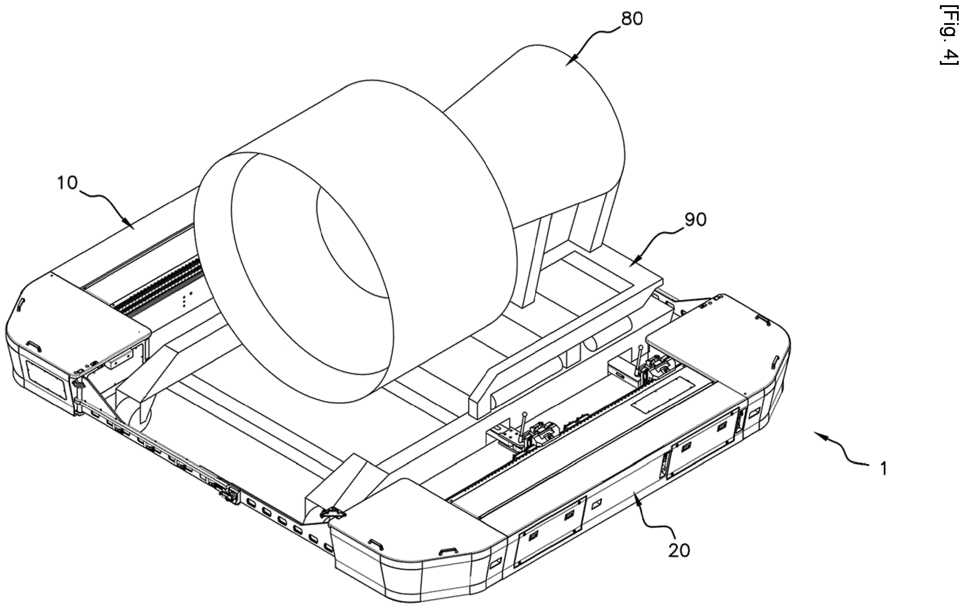

Les bras de liaison 16, 17 permettent de solidariser les deux modules mobiles 10, 20 entre eux en maintenant un écartement constant entre les deux modules mobiles 10, 20, et notamment d'éviter leur écartement tout en évitant leur rapprochement. Ils permettent également de maintenir un positionnement relatif de l'un par rapport à l'autre fixe comme on peut le voir sur la figure 3. Un moteur 80 et un bâti de transport 90 sur lequel le moteur repose (ou un autre élément d'aéronef) peuvent être disposés entre le premier module mobile 10 et le deuxième module mobile 20 tel que représenté à la figure 4. L'élément d'aéronef à manipuler, un moteur 80 d'aéronef dans le mode de réalisation représenté, est destiné à être disposé entre le premier module mobile 10 et le deuxième module mobile 20 du système de chariot mobile. Dans le mode de réalisation représenté, le moteur d'aéronef est disposé de façon à ce que l'axe longitudinal du moteur d'aéronef soit orienté parallèlement à l'axe longitudinal de chacun des modules mobiles 10, 20. Rien n'empêche qu'il puisse être prévu que l'orientation du moteur d'aéronef chargé sur le système soit différente de celle illustrée, et par exemple perpendiculaire à l'axe longitudinal de chacun des modules mobiles 10, 20.

Dans le mode de réalisation illustré chaque bras de liaison 16, 17, 18, 19 s'étend selon une direction sensiblement transversale, orthogonale à ladite direction longitudinale de chaque module mobile 10, 20, chaque bras de liaison 16, 17, 18, 19 étant lié au châssis du premier module mobile 10 ou au châssis du deuxième module 20 par une liaison pivot autorisant une rotation autour d'un axe vertical, orthogonal à la direction selon laquelle s'étend ledit bras de liaison. Le premier module mobile 10 comprend deux bras de liaison 16, 18. Le deuxième module mobile 20 comprend deux bras de liaison 17, 19. Le bras de liaison 16 du premier module mobile 10 est fixé au bras de liaison 19 du deuxième module 20 par une liaison mécanique permettant d'ajuster la longueur totale formée par les deux bras de liaison. De même, le bras de liaison 17 du deuxième module mobile 20 est fixé au bras de liaison 18 du premier module mobile 10 par une liaison mécanique permettant d'ajuster la longueur totale formée par les deux bras de liaison. Les bras de liaison sont fixés et réglés de façon à ce qu'une distance identique sépare le premier module mobile 10 et le deuxième module mobile 20. La liaison reliant les bras de liaison entre eux, après ajustement de la longueur totale, est une liaison complète, les deux bras de liaisons assemblés deux à deux se comportant chacun de la même façon qu'une unique barre ou tige.

Lorsque le premier module mobile et le deuxième module mobile sont solidarisés entre eux via ledit bras de liaison et se déplacent simultanément, l'un des deux modules fonctionne de préférence en tant que « maître ».

Au moins un bras de liaison 18, 19 comprend un câble 70 de communication adapté pour permettre une communication et une transmission de données entre le premier module mobile 10 et le deuxième module mobile 20. Chaque câble 70 de communication peut être disposé à l'intérieur du bras de liaison (dans le cas où le bras de liaison est formé d'une barre creuse par exemple) ou rapporté sur celui-ci, par exemple à l'intérieur d'une goulotte 72 elle-même fixée le long du bras 18 de liaison (figure 1). Sur la figure 1, l'extrémité distale du câble 72 de communication du bras 18 de liaison est reliée à un connecteur 74 de stockage. Le bras 16 de liaison comprend également une goulotte 73 à l'intérieur de laquelle est prédisposé un câble de communication (non visible). Le bras 16 de liaison présente également plusieurs connecteurs 76 reliés au câble de communication disposé à l'intérieur de la goulotte 73. Au moment de la solidarisation entre le premier module mobile 10 et le deuxième module mobile 20, un câble de communication du bras de liaison 19 du deuxième module mobile 20 pourra être connecté au connecteur 76 dont l'extrémité sera la plus proche, en fonction du réglage souhaité de la distance (écartement) entre les deux modules mobiles 10 et 20.

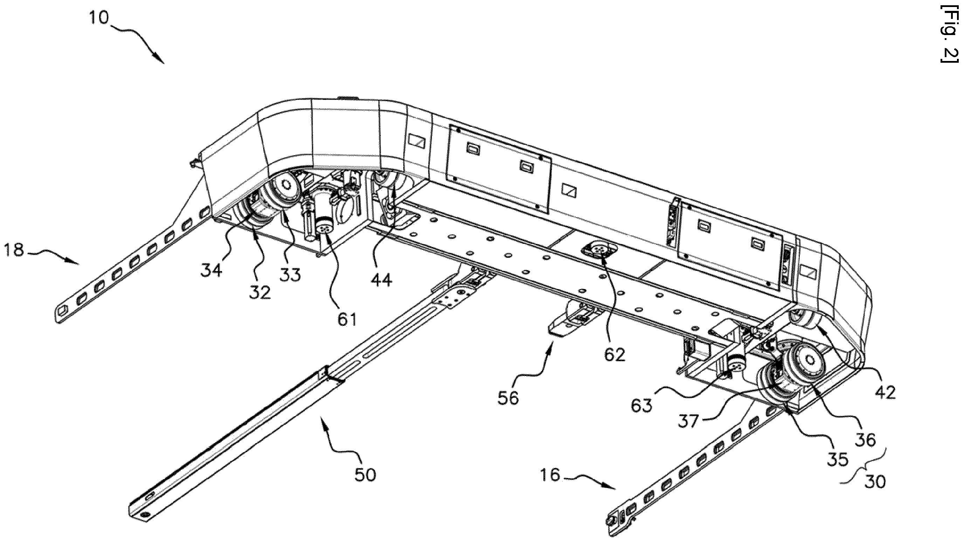

Dans le mode de réalisation d'un système de chariot mobile représenté sur les figures 1 à 8, comme on peut le voir en figure 2 de-dessous, chaque bloc-roue 30 comprend deux roues motorisées 35, 36, 33, 34. Les roues sont montées sur un palonnier 34, 37 de façon à permettre une répartition uniforme des charges entre elles. La rotation coordonnée et synchronisée en sens inverse des roues 35, 36, 33, 34 permet l'autorotation du bloc-roue 30. Dans le mode de réalisation d'un système de chariot mobile représenté sur les figures 1 à 8, chaque module mobile 10, 20 comprend également deux roues folles 42, 44 (figure 2).

Ainsi, chaque module mobile est adapté pour pouvoir être déplacé selon toutes les directions. De même, le système de chariot mobile comprenant le premier module mobile et le deuxième module mobile solidarisés entre eux est adapté pour pouvoir être déplacé selon toutes les directions. De cette façon, le système et chaque module peut être déplacé axialement (longitudinalement ou latéralement selon une direction transversale) en avant ou en arrière, mais également en réalisant une autorotation autour d'un axe de rotation prédéterminé.

Le système peut comprendre des codeurs de sécurité permettant de contrôler la position relative de chaque module mobile (en particulier leur écartement et l'angle qu'ils forment l'un par rapport à l'autre) et ainsi les piloter ensemble.

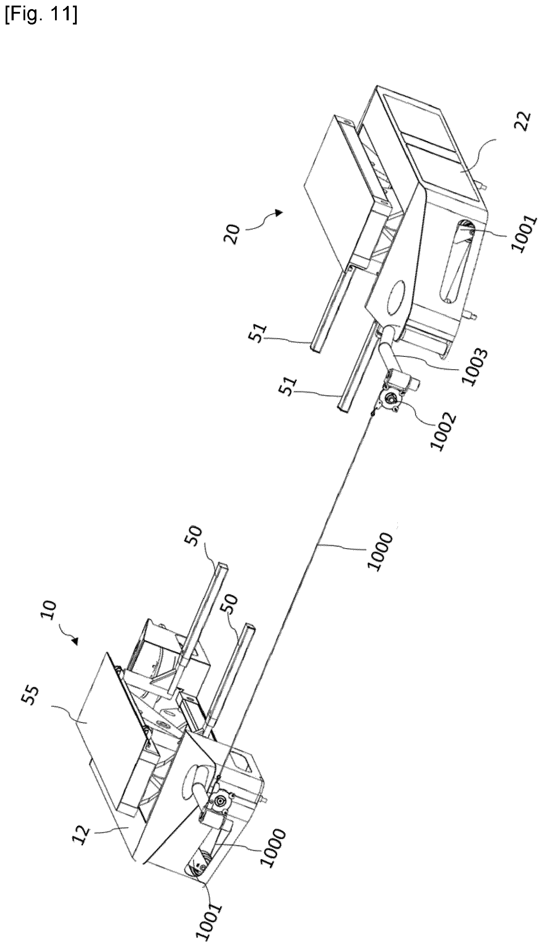

Chaque dispositif de levage est adapté pour pouvoir déplacer un élément d'aéronef verticalement et par une inclinaison par rapport à un plan de levage orthogonal à ladite direction verticale (déplacement en tangage et /ou en roulis de façon indépendante ou combinée avec un déplacement selon une direction verticale) par combinaison du mouvement coordonné des actionneurs de levage. Chaque dispositif de levage comprend au moins un vérin de levage (hydraulique ou électrique). Dans le mode de réalisation d'un système de chariot mobile représenté aux figures 1 à 8, il s'agit d'un dispositif de levage à ciseaux croisés actionnés à l'aide de deux vérins de levage. Les ciseaux croisés de levage sont visibles à la figure 11.

Chaque dispositif de levage 55 de chaque module mobile 10, 20 comprend au moins une fourche 50, 51 s'étendant selon une direction transversale. Dans le système de chariot mobile représenté aux figures 1 à 8, chaque module mobile 10, 20 comprend une fourche 50, 51 et un dispositif de verrouillage de la fourche de l'autre module mobile. Dans le mode de réalisation d'un système de chariot mobile représenté aux figures 1 à 8, le premier module mobile 10 comprend une fourche 50 fixée à un rail 58 via un premier dispositif de fixation 53, ainsi qu'un deuxième dispositif de fixation 57 d'une extrémité réceptrice 56 « mâle » de verrouillage adaptée pour recevoir l'extrémité d'une fourche 51 du deuxième module mobile 20. Le deuxième module mobile 20 comprend une fourche 51 fixée à un rail via un premier dispositif de fixation 52, ainsi qu'un deuxième dispositif de fixation 54 d'une extrémité réceptrice « mâle » de verrouillage adaptée pour recevoir l'extrémité « femelle » 59 de la fourche 50 du premier module mobile 10. Comme illustré à la figure 1, le rail 58 s'étend longitudinalement sur une face interne du châssis d'un module mobile. Chaque fourche et chaque dispositif de fixation peut coulisser en translation le long dudit rail 58 du premier module mobile ou d'un rail identique (non représenté) du deuxième module mobile. Le verrouillage pourrait aussi alternativement être réalisé entre les extrémités respectives de quatre fourches (deux à deux).

Ainsi, lorsque le premier module mobile 10 et le deuxième module mobile 20 sont assemblés l'un avec l'autre à l'aide des bras de liaison 16, 17, 18, 19 (c'est-à-dire notamment en configuration de déplacement ou de manipulation d'un élément d'aéronef), les bras de liaison et les fourches s'étendent selon des directions sensiblement parallèles entre elles.

Dans l'exemple de la figure 11, le bras de liaison disposé en avant ou en arrière des modules mobiles 10, 20 est remplacé par au moins un câble de liaison 1000. Dans cet exemple, au moins un module mobile 10, 20 comporte au moins un câble de liaison 1000 qui est disposé en avant du système 1 de chariot mobile. Il est à noter que pour des raisons de clarté le bras de liaison 16, 17 disposé à l'arrière de chaque module 10, 20 n'est pas représenté.

Dans l'exemple de la figure 11, chaque module mobile 10, 20 comporte un câble de liaison 1000 configuré pour être connecté à l'autre module mobile 10, 20. En sus, chaque module mobile 10, 20 qui comporte un câble de liaison 1000 peut comprendre un moyen de gestion du stockage et du déploiement du câble de liaison 1000. En particulier, chaque module mobile 10, 20 peut comporter enrouleur 1001. L'enrouleur 1001 dispose de moyens de verrouillage permettant de maintenir l'écartement constant entre les deux modules mobiles 10, 20. Dans cet exemple, l'enrouleur 1001 est logé dans le châssis 12, 22 de chaque module mobile 10, 20. Dans cet exemple, le châssis 12, 22 comporte une ouverture béante qui laisse sortir ou rentrer le câble de liaison 1000 dans le logement de l'enrouleur 1001.

Par ailleurs, chaque module 10, 20 peut comporter une poulie 1002 pour faciliter l'enroulement et le déroulement du câble de liaison 1000. Dans l'exemple de la figure 11, la poulie 1002 est déportée par rapport au châssis 12, 22 de chaque module mobile 10, 20. Ainsi, un espace plus grand est généré entre les modules mobiles 10, 20 en vue de charger des éléments d'aéronef de plus grande taille.

En particulier, chaque module mobile 10, 20 peut comprendre un bras de déport 1003 qui porte à son extrémité libre la poulie 1002. Dans cet exemple, le bras de déport 1003 est couplé au châssis à l'aide d'une liaison pivot. Le bras de déport 1003 peut ainsi être replié pour améliorer la compacité du système 1 de chariot mobile ou déployé lors du chargement d'un élément d'aéronef en vue de s'adapter aux dimensions de l'élément d'aéronef.

La poulie 1002 peut également être montée rotative par rapport au bras de déport 1003. Ce qui assure l'ajustement de l'écartement des deux modules mobiles 10, 20 par rapport à l'élément d'aéronef à charger. Chaque module 10, 20 comporte un moyen de verrouillage pour un câble de liaison 1000 dont l'enrouleur 1001 est situé dans l'autre module 10, 20. Ici, le moyen de verrouillage est disposé sur la poulie 1002. Le moyen de verrouillage peut être constitué par un brochage.

En pratique, on attache le câble de liaison 1000 logé dans un premier module mobile au second module mobile. Si chaque module mobile 10, 20 comporte un câble de liaison 1000, on attache les deux câbles de liaison 1000 entre les deux modules mobiles.

La distance entre les deux module mobiles 10, 20 ajustée par pilotage d'un ou des deux modules mobiles. La distance est ajustée en fonction des dimensions de l'élément d'aéronef et/ou de son bâti de transport. Puis, le moyen de verrouillage de chaque enrouleur 1001 est enclenché en vue de maintenir l'écartement entre les deux modules 10, 20 constant.

Il est à noter que les bras de liaison à l'arrière de chaque module 10, 20 sont également couplés entre eux. L'ajustement de l'écartement entre les deux modules mobiles est réalisée alors que les fourches 50, 51 sont insérées dans les fourreaux 900 du bâti de transport 90.

Le système de chariot mobile selon le mode de réalisation représenté aux figures 1 à 8 peut ainsi s'adapter à toutes les tailles de moteurs et de bâtis de transport en fonction de l'écartement entre le premier module mobile et le deuxième module mobile, de l'écartement des fourches (parallèlement entre elles), de la position des fourches sur chaque module mobile et de la hauteur des fourches. Ces réglages permettent également de gérer la position du centre de gravité de la charge représentée par l'élément d'aéronef.

Chaque fourche peut être au moins en partie rétractable de façon à pouvoir en régler la longueur. Chaque fourche peut se déployer et se replier de façon téléscopique par exemple.

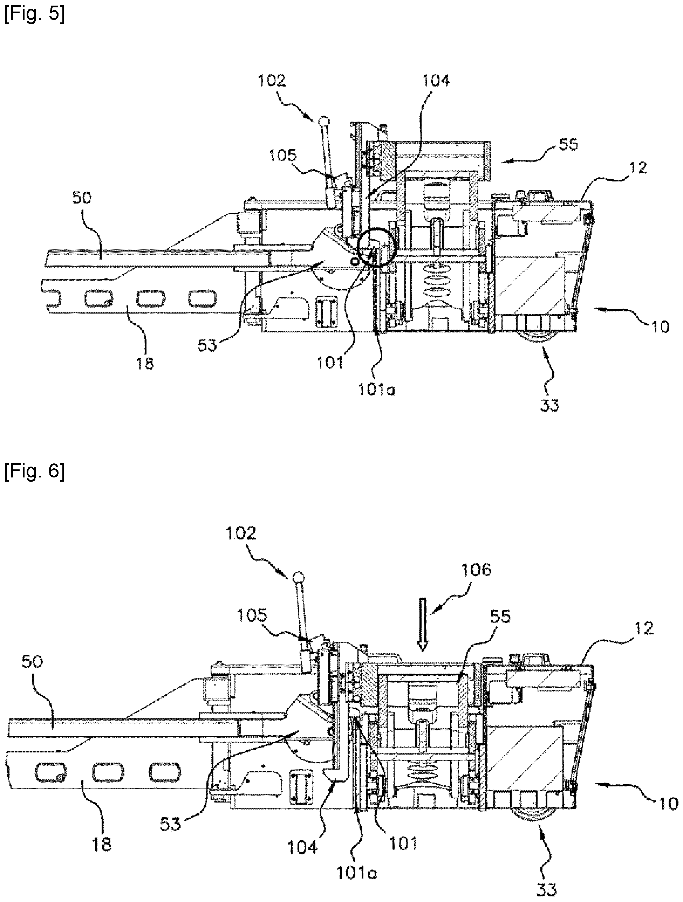

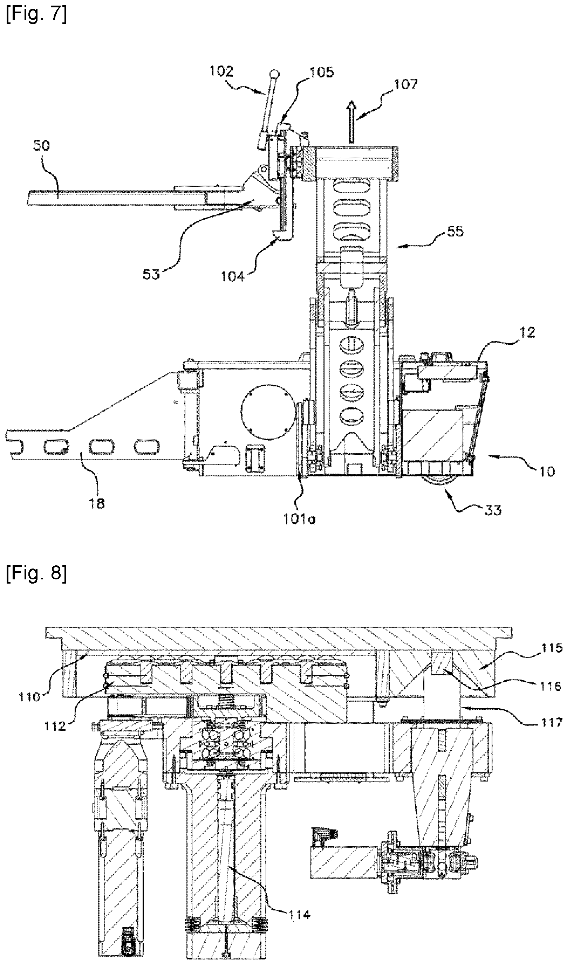

Chaque dispositif de levage du système de chariot mobile peut en outre permettre un deuxième niveau de réglage de la position des fourches selon la verticale. Sur la figure 1, chaque fourche est dans une position correspondant à la position la plus basse des fourches et à la position usuelle de prise d'un chargement à l'aide des fourches. Dans cette position la distance entre la face supérieure de chaque fourche et une face supérieure du dispositif de levage est maximale. Cette position présente l'avantage de permettre une prise d'un chargement à l'aide des fourches au plus près du sol lorsque cela est nécessaire. Dans le mode réalisation représenté, comme on peut le voir aux figures 5, 6 et 7, chaque dispositif de fixation 53, 57 au rail 58 comprend également un basculeur 101 de butée qui peut être actionné à l'aide d'un levier 102 de butée. A partir d'une position telle que représentée en figure 1, le dispositif de levage est actionné de façon à lever les fourches jusqu'à atteindre une position prédéterminée illustrée en figure 5 sur laquelle le levier 102 de butée a été déplacé afin de modifier la position du basculeur 101 de butée dont une extrémité prend appui sur une pièce 101a, appelée came fourche, de façon à permettre au dispositif de fixation 53 de se déplacer verticalement le long d'un coulisseau 104 jusqu'à atteindre une position de butée basse représentée en figure 6 atteinte après descente du dispositif de levage tel qu'illustré par la flèche 106 en figure 6. Dans la position représentée en figure 6, un levier 105 de verrouillage peut être basculé (voir figure 7 après basculement de ce levier 105 de verrouillage) et permettre le levage des fourches dans cette position vers le haut tel qu'illustré par la flèche 107 sur la figure 7. Ceci permet d'offrir un certain jeu supplémentaire selon l'axe vertical particulièrement utile et appréciable lors des opérations de pose et/ou dépose de l'élément d'aéronef.

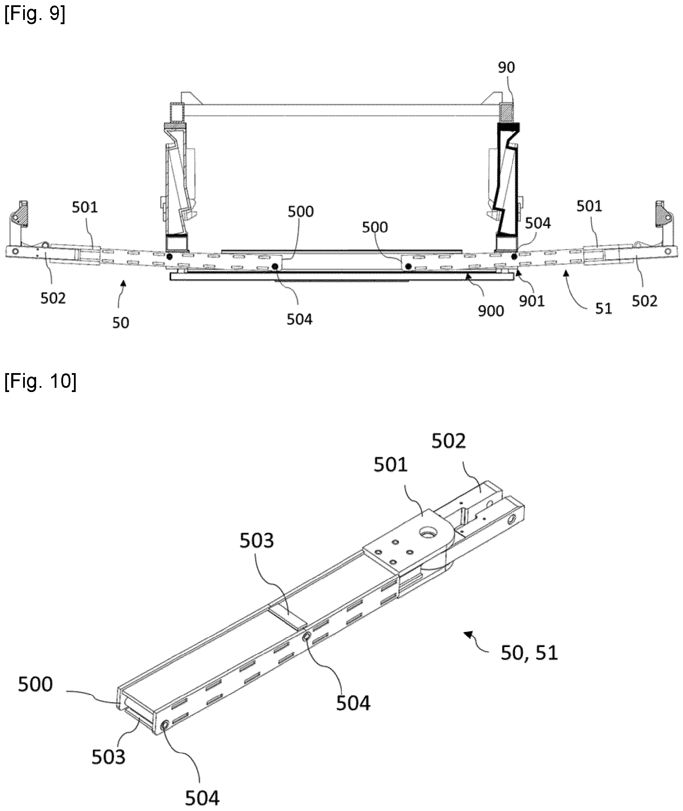

Comme illustré aux figures 9 et 10, chaque fourche 50, 51 peut s'étendre longitudinalement jusqu'à une extrémité libre 500. En particulier, chaque fourche 50, 51 s'étend entre une pièce en étrier 501 et son extrémité libre 500. Les fourches 50, 51 peuvent être réalisées par assemblage mécano-soudé avec des tenons-mortaises orientés de façon à éviter les soudures travaillantes. Dans cet exemple, chaque fourche 50, 51 est montée en pivot au dispositif de fixation 53, 57. Cela permet le déploiement et le repliement des fourches 50, 51 parallèlement au châssis 12, 22 du module mobile 10, 20. Les fourches 50, 51 sont déployées en vue de la prise en charge d'un élément d'aéronef 80 et repliées pour le stockage et le déplacement du système 1 de chariot mobile.

La pièce en étrier 501 permet de coupler la fourche 50, 51 au dispositif de fixation 53, 57. Chaque module 10, 20 comporte une pièce de couplage 502 sur laquelle la pièce en étrier 501 est montée en pivot. La pièce de couplage 502 est montée sur le dispositif de fixation 53, 57 de chaque module 10 ,20. L'articulation que constitue la pièce en étrier 501 et la pièce de couplage 502 permet le repliement et le déploiement des fourches 50, 51.

Comme illustré à la figure 9, chaque fourche 50, 51 est configurée pour être positionnée en porte à faux, par exemple, dans un fourreau 900 du bâti de transport 90. En effet, une fois la fourche 50, 51 introduite dans le fourreau 900, l'extrémité libre 500 prend appui sur une paroi inférieure du fourreau 900. Dans le même temps, en entrée 901 du fourreau 900, le corps de la fourche 50, 51 prend appui sur une paroi supérieure du fourreau 900. Dans ce mode de réalisation, le système de chariot mobile comporte quatre fourches 50, 51 identiques. Par ailleurs, les fourches 50, 51 de deux modules mobiles 10, 20 ne sont pas aboutées ensembles, en particulier, chaque fourche 50, 51 s'arc boute entre les deux points d'appui que prend la fourche 50, 51 sur le fourreau 900 dans lequel ladite fourche 50, 51 est introduite.

Dans l'exemple illustré aux figures 9 et 10, chaque fourche 50, 51 comporte au moins un patin d'appui 503. Le patin d'appui 503 assure une meilleure prise lors de la mise en charge de l'élément d'aéronef. En outre, chaque patin d'appui 503 peut comporter un système d'ajustement de l'orientation spatiale du patin d'appui 503 selon au moins un axe. Le patin d'appui 503 orientable selon au moins un axe améliore la prise en charge de l'élément d'aéronef, par exemple, au travers d'un fourreau 900 du bâti de transport 90. Il est ainsi possible d'orienter le patin d'appui 503 en fonction de la surface d'appui de la fourche 50, 51 et de prévenir une prise d'appui sur une surface inadéquate telle qu'une arête. Par exemple, le patin d'appui 503 peut être monté en pivot sur un axe 504 avec un débattement limité. Ici, l'axe 504 est perpendiculaire à la direction longitudinale des fourches 50, 51.

Dans l'exemple des figures 9 et 10, chaque fourche 50, 51 comprend deux patins d'appui 503. Un premier patin d'appui 503 est disposé à l'extrémité libre de la fourche 500. En particulier, le premier patin d'appui 503 est disposé sur la face inférieure de la fourche 50, 51. Un second patin d'appui 503 est disposé à une distance déterminée du premier patin d'appui 503. En particulier, le second patin d'appui 503 peut être disposé à une distance comprise entre 500 mm et 1000 mm du premier patin d'appui 503. Par ailleurs, le second patin d'appui 503 est ménagé sur la face supérieure de la fourche 50, 51. Ainsi, le premier patin d'appui 503 prend appui sur la paroi inférieure du fourreau 900 alors que le second patin d'appui 503 prend appui sur la paroi supérieure du fourreau 900 en entrée 901 de celui-ci.

La fourche 50, 51 chaque module mobile 10, 20 des figures 9 et 10, sont couplées aux dispositifs de fixation 53, 57 de la même façon que les fourches 50, 51 des figures 1 à 8.

Avantageusement, coupler le mode de réalisation des figures 9 et 10 et le mode de réalisation de la figure 11 permet de générer en espace disponible plus conséquent entre les deux modules mobiles 10, 20 afin de s'adapter à des éléments d'aéronef ou des bâtis de transport 90 plus grands. Néanmoins, les modes de réalisation des figures 9, 10 et 11 sont également compatibles avec les modes de réalisation des figures 1 à 8.

Chaque module mobile 10, 20 comprend trois vérins de souplesse 61, 62, 63. Deux vérins 61, 63 de souplesse sont disposés à chacune des extrémités longitudinales du châssis du premier module mobile 10 et le troisième vérin 62 est disposé au niveau d'une portion centrale du châssis 12 du premier module mobile 10. Chaque vérin de souplesse 61, 62, 63 peut être hydraulique ou électrique. Chaque vérin de souplesse peut être associé à un plateau à billes porteuses de façon à permettre par exemple un débattement dans un plan sensiblement horizontal de plus ou moins 50 mm environ. Ceci permet, une fois chaque vérin de souplesse déployé, de libérer la charge formée par l'élément d'aéronef et le bâti de transport du moteur d'aéronef, à un nombre réduit d'opérateurs de pouvoir exercer des efforts à la main sur le moteur d'aéronef et le bâti de transport afin d'aligner un dispositif de fixation du moteur d'aéronef aux fixations d'un mât d'aéronef Ceci peut également être réalisé en utilisant d'autres systèmes de sustentation à la place des plateaux à billes tels qu'un coussin d'air (couche d'air sous pression) ou encore à l'aide de paliers hydrostatiques ou hydrodynamiques. Chaque vérin de souplesse permet également de régler l'assiette et l'inclinaison de chaque module mobile.

Pour ce faire, dans le mode de réalisation représenté au figures 1 à 8, et comme on peut le voir en particulier sur la figure 8, le système de chariot mobile comprend une plaque de roulement 110 posée sur et en contact avec les billes d'un plateau à billes 112 disposé en regard de chaque vérin 114 de levage. Un vérin 117 de centrage est associé à ce dispositif et comprend également un bloc 116 de centrage adapté pour pouvoir se déplacer dans un cône 115 de centrage. L'axe de verrouillage permet de bloquer totalement ou de doser la plage de mouvement autorisé du plateau à billes 112 sur la plaque de roulement 110. Cet axe est commandé par un motoréducteur avec renvoi d'angle. Lorsque le vérin 117 de centrage est en position haute (comme illustré en figure 8), le cône 115 de centrage épouse la forme du bloc 116 de centrage, bloquant ainsi tout mouvement relatif entre le plateau à billes 112 et la plaque de roulement 110. En baissant progressivement la position du vérin 117 de centrage, le bloc 116 de centrage descend dans le cône 115 de centrage et la plage de mouvement autorisée dans le plan augmente.

Le système peut également comprendre des capteurs d'efforts permettant de s'assurer que le système de chariot mobile n'est pas surchargé et/ou de maitriser par exemple les efforts d'application entre le moteur et l'aéronef.

Le système 1 de chariot mobile selon le mode de réalisation représenté aux figures 1 à 8 présente un encombrement réduit lui permettant de pouvoir être transporté par camion, bateau ou encore par avion. Afin de faciliter leur déplacement et leur chargement, chaque module mobile peut présenter au moins deux anneaux de levage, en particulier trois anneaux de levage répartis aux extrémités longitudinales et au centre, afin de pouvoir le déplacer aisément à l'aide d'un pont roulant. Il est également possible de déplacer chaque module mobile 10, 20 avec un chariot élévateur.

Le système de chariot mobile selon le mode de réalisation représenté aux figures 1 à 8 présente par exemple des dimensions telles qu'il présente une longueur de l'ordre de 6,40 mètres, une largeur de l'ordre de 3,55 mètres et une hauteur de l'ordre de 0,80 mètre lorsque le premier module mobile et le deuxième module mobile sont disposés côte à côte (sans bras de liaison entre eux et avec leurs fourches non déployées) selon leur longueur.

Dans un procédé de mise en oeuvre d'un système de chariot mobile pour élément d'aéronef :
- on pilote ledit premier module mobile de façon à insérer les fourches dudit premier module mobile dans des fourreaux d'un bâti de transport 90 adapté pour pouvoir recevoir ledit élément d'aéronef, puis
- on pilote ledit deuxième module mobile de façon à insérer les fourches dudit deuxième module mobile dans lesdits fourreaux dudit bâti de transport 90, puis
- on solidarise entre eux le châssis dudit premier module et le châssis dudit deuxième module mobile à l'aide d'au moins un bras de liaison, puis
- on pilote ledit premier module mobile et ledit deuxième module mobile de façon coordonnée entre eux, de façon à permettre le déplacement du système au sol,
- on déplace ledit élément d'aéronef au moins selon une direction verticale à l'aide d'un dispositif de levage dudit module mobile
- on déploie des vérins de souplesse de façon à permettre au moins une translation dudit élément d'aéronef dans un plan horizontal, sensiblement orthogonal à ladite direction verticale, par rapport à chaque module mobile.

Le dispositif de levage peut également être utilisé après le déploiement des vérins de souplesse.

Lorsqu'ils sont déployés, l'extrémité inférieure de chacun des vérins 61, 62, 63 de souplesse entre en contact avec le sol.

D'autre part, les roues motorisées 35, 36, 33, 24 peuvent être bloquées, en particulier préalablement au déploiement des vérins 61, 62, 63 de souplesse.

En particulier, après avoir inséré les fourches de chacun desdits premier et deuxième modules mobiles dans les fourreaux du bâti de transport, on verrouille chaque fourche 50 du premier module mobile avec le deuxième module mobile et on verrouille chaque fourche 51 du deuxième module mobile avec le premier module mobile. Le verrouillage des fourches peut en particulier être automatique, par exemple via un système à ressorts grâce auquel le verrouillage des fourches est automatique dès qu'une masse (c'est-à-dire celle d'un élément d'aéronef et d'un bâti de transport éventuel) est supportée par les fourches de façon à ne pas nécessiter d'intervention manuelle d'un opérateur, ni de commande électrique.

En particulier, cette description est donnée à titre d'exemple illustratif uniquement. L'homme du métier pourra y apporter de nombreuses modifications, outre les variantes évoquées au cours de la description ci-dessus, sans sortir de la portée des revendications.

## Revendications

1. Système (1) de chariot mobile pour déplacer un élément d'aéronef (80) qui est un moteur d'avion, ledit système comprenant :
- un premier module mobile (10) et un deuxième module mobile (20), chaque module mobile (10, 20) s'étendant principalement selon un axe longitudinal et comprenant :
∘ un châssis (12, 22) équipé d'au moins trois roues (32, 33, 35, 36, 42, 44),
∘ un dispositif de levage (55) adapté pour pouvoir déplacer ledit élément d'aéronef (80) au moins selon une direction verticale, le dispositif de levage (55) de chaque module mobile (10, 20) comprenant au moins une fourche (50, 51) qui s'étend selon une direction transversale, orthogonale à l'axe longitudinal de chaque module (10, 20),
∘ au moins un bras de liaison (16, 17, 18, 19) adapté pour pouvoir solidariser entre eux le châssis dudit premier module et le châssis dudit deuxième module,
**caractérisé en ce que** le premier module mobile (10) et le second module mobile (20) sont adaptés pour pouvoir être pilotés et déplacés indépendamment l'un de l'autre et simultanément de façon coordonnée entre eux lorsqu'ils sont solidarisés entre eux à l'aide d'au moins un bras de liaison(16, 17, 18,19), et le dispositif de levage (55) de chaque module mobile (10, 20) étant adapté pour pouvoir déplacer l'élément d'aéronef (80) verticalement et par une inclinaison par rapport à un plan de levage orthogonal à ladite direction verticale.

2. Système selon la revendication 1, dans lequel, chaque module mobile (10, 20) comprend un rail (58) qui s'étend longitudinalement, la fourche (50, 51) de chaque module mobile (10, 20) étant fixée au rail (58) dudit module mobile (10, 20) via un dispositif de fixation (52, 53), sur chaque module mobile (10, 20) la fourche (50, 51) et le dispositif de fixation (52, 53) sont montés coulissants en translation le long du rail (58).

3. Système selon la revendication 2, dans lequel, chaque dispositif de fixation (53, 57) au rail (58) comprend également un basculeur (101) de butée qui est actionné à l'aide d'un levier (102) de butée.

4. Système selon l'une des revendications 1 à 3, dans lequel, chaque fourche (50, 51) comporte au moins un patin d'appui (503).

5. Système selon la revendication 4, dans lequel, chaque patin d'appui (503) comporte un système d'ajustement de l'orientation spatiale du patin d'appui (503) selon au moins un axe.

6. Système selon l'une des revendications 1 à 5, dans lequel, chaque module mobile (10, 20) comprend au moins deux vérins (61, 62, 63), dits vérins de souplesse, chaque vérin de souplesse étant associé à au moins un plateau (112) à billes porteuses de façon à permettre au moins une translation dudit élément d'aéronef dans un plan horizontal, sensiblement orthogonal à ladite direction verticale, par rapport à chaque module mobile.

7. Système selon l'une des revendications 1 à 6, dans lequel, le dispositif de levage (55) comprend des ciseaux croisés actionnés à l'aide de deux vérins de levage.

8. Système selon l'une des revendications 1 à 7, dans lequel, le dispositif de levage (55) comporte au moins un vérin de levage.

9. Système selon l'une des revendications 1 à 8, dans lequel, au moins le premier module mobile (10) comporte :
- un câble de liaison (1000) configuré pour être connecté au deuxième module mobile (20), et
- un moyen de gestion du stockage et du déploiement du câble de liaison (1000).

10. Système selon l'une des revendications 1 à 9, dans lequel, le bras de liaison (16, 17, 18, 19) d'au moins un module mobile (10, 20) comprend un câble (70) de communication adapté pour permettre une transmission de données entre le premier module mobile et le deuxième module mobile, et chaque bras de liaison (16, 17) s'étend selon une direction transversale, orthogonale à ladite direction longitudinale dudit module mobile.

11. Système selon l'une des revendications 1 à 10, dans lequel, chaque bras de liaison (16, 17) est lié à au moins un desdits premier module mobile (10) et deuxième module mobile (20) par une liaison pivot.

12. Système selon l'une des revendications 1 à 11, qui comprend, deux bras de liaison (16, 17, 18, 19), un premier bras de liaison (16) étant fixé au châssis dudit premier module mobile (10) et un deuxième bras de liaison (17) étant fixé au châssis dudit deuxième module mobile (20).

13. Système selon l'une des revendications 1 à 12, dans lequel, le châssis (12, 22) de chaque module mobile (10, 20) est équipé d'au moins deux roues motorisées (32, 33, 35, 36).

14. Procédé de mise en oeuvre d'un système selon l'une des revendications 1 à 13, dans ledit procédé :
- on pilote ledit premier module mobile (10) de façon à insérer au moins une fourche (50) dudit premier module mobile dans des fourreaux d'un bâti de transport, ledit bâti de transport étant adapté pour pouvoir recevoir ledit élément d'aéronef (80), puis
- on pilote ledit deuxième module mobile (20) de façon à insérer au moins une fourche (51) dudit deuxième module mobile dans les fourreaux dudit bâti de transport,
- on solidarise entre eux le châssis dudit premier module et le châssis dudit deuxième module mobile à l'aide d'au moins un bras de liaison (16, 17, 18, 19), puis
- on pilote ledit premier module mobile et ledit deuxième module mobile de façon coordonnée entre eux,
- on déplace ledit élément d'aéronef (80) au moins selon une direction verticale à l'aide du dispositif de levage de chaque module mobile.

15. Procédé selon la revendication 14, dans lequel, après avoir déplacé ledit élément d'aéronef (80) au moins selon une direction verticale à l'aide dudit dispositif de levage, on déploie des vérins (61, 62, 63) de souplesse d'un dispositif de levage de chaque module mobile (10, 20).

## Patentansprüche

1. Beweglich Schlittensystem (1) zum Bewegen eines Flugzeugelements (80), die ein Flugzeugmotor ist, das System umfassend:
- ein erstes bewegliches Modul (10) und ein zweites bewegliches Modul (20), wobei sich jedes bewegliche Modul (10, 20) hauptsächlich entlang einer Längsachse erstreckt und Folgendes umfasst:
o einen Rahmen (12, 22), der mit mindestens drei Rädern (32, 33, 35, 36, 42, 44) ausgestattet ist,
o eine Hebevorrichtung (55), die angepasst ist, um das Flugzeugelement (80) mindestens in einer vertikalen Richtung bewegen zu können, die Hebevorrichtung (55) von jedem beweglichen Modul (10, 20) umfassend mindestens eine Gabel (50, 51), die sich in einer Querrichtung erstreckt, die orthogonal zu der Längsachse von jedem Modul (10, 20) ist,
o mindestens einen Verbindungsarm (16, 17, 18, 19), der angepasst ist, um den Rahmen des ersten Moduls und den Rahmen des zweiten Moduls fest miteinander verbinden zu können,
**dadurch gekennzeichnet, dass** das erste bewegliche Modul (10) und das zweite bewegliche Modul (20) angepasst sind, um unabhängig voneinander und gleichzeitig koordiniert miteinander gesteuert und bewegt werden zu können, wenn sie mittels mindestens eines Verbindungsarms (16, 17, 18, 19) verbunden werden zu können, und wobei die Hebevorrichtung (55) von jedem beweglichen Modul (10, 20) angepasst ist, um das Flugzeugelement (80) vertikal und durch eine Neigung in Bezug auf eine Hebeebene orthogonal zu der vertikalen Richtung bewegen zu können.

2. System nach Anspruch 1, wobei jedes bewegliche Modul (10, 20) eine Schiene (58) umfasst, die sich in Längsrichtung erstreckt, wobei die Gabel (50, 51) von jedem beweglichen Modul (10, 20) über eine Befestigungsvorrichtung (52, 53) an der Schiene (58) des beweglichen Moduls (10, 20) befestigt ist, wobei die Gabel (50, 51) und die Befestigungsvorrichtung (52, 53) translatorisch verschiebbar entlang der Schiene (58) an jedem beweglichen Modul (10, 20) montiert sind.

3. System nach Anspruch 2, wobei jede Befestigungsvorrichtung (53, 57) an der Schiene (58) auch eine Anschlagkippeinrichtung (101) umfasst, die mittels eines Anschlaghebels (102) betätigt wird.

4. System nach einem der Ansprüche 1 bis 3, wobei jede Gabel (50, 51) mindestens eine Auflagekufe (503) umfasst.

5. System nach Anspruch 4, wobei jede Auflagekufe (503) ein Einstellsystem der räumlichen Ausrichtung der Auflagekufe (503) entlang mindestens einer Achse umfasst.

6. System nach einem der Ansprüche 1 bis 5, wobei jedes bewegliche Modul (10, 20) mindestens zwei Zylinder (61, 62, 63), sogenannte Flexibilitätszylinder, umfasst, wobei jeder Flexibilitätszylinder mit mindestens einer Tragkugelplatte (112) assoziiert ist, um mindestens eine Translation des Flugzeugelements in einer horizontalen Ebene, im Wesentlichen orthogonal zu der vertikalen Richtung, in Bezug auf jedes bewegliche Modul zu ermöglichen.

7. System nach einem der Ansprüche 1 bis 6, wobei die Hebevorrichtung (55) eine Kreuzschere umfasst, die mittels zwei Hebezylindern betätigt wird.

8. System nach einem der Ansprüche 1 bis 7, wobei die Hebevorrichtung (55) mindestens einen Hebezylinder umfasst.

9. System nach einem der Ansprüche 1 bis 8, wobei mindestens das erste bewegliche Modul (10) Folgendes umfasst:
- ein Verbindungskabel (1000), das konfiguriert ist, um mit dem zweiten mobilen Modul (20) verbunden zu werden, und
- eine Handhabungseinrichtung der Aufbewahrung und des Einsatzes des Verbindungskabels (1000).

10. System nach einem der Ansprüche 1 bis 9, wobei der Verbindungsarm (16, 17, 18, 19) mindestens eines mobilen Moduls (10, 20) ein Kommunikationskabel (70) umfasst, das angepasst ist, um eine Datenübertragung zwischen dem ersten mobilen Modul und dem zweiten mobilen Modul zu ermöglichen, und sich jeder Verbindungsarm (16, 17) in einer Querrichtung erstreckt, die orthogonal zu der Längsrichtung des mobilen Moduls ist.

11. System nach einem der Ansprüche 1 bis 10, wobei jeder Verbindungsarm (16, 17) durch eine Schwenkverbindung mit mindestens einem von dem ersten beweglichen Modul (10) und dem zweiten beweglichen Modul (20) verbunden ist.

12. System nach einem der Ansprüche 1 bis 11, das zwei Verbindungsarme (16, 17, 18, 19) umfasst, wobei ein erster Verbindungsarm (16) an dem Rahmen des ersten beweglichen Moduls (10) befestigt ist und ein zweiter Verbindungsarm (17) an dem Rahmen des zweiten beweglichen Moduls (20) befestigt ist.

13. System nach einem der Ansprüche 1 bis 12, wobei der Rahmen (12, 22) von jedem mobilen Modul (10, 20) mit mindestens zwei angetriebenen Rädern (32, 33, 35, 36) ausgestattet ist.

14. Verfahren zum Einsetzen eines Systems nach einem der Ansprüche 1 bis 13,
wobei in dem Verfahren:
- das erste bewegliche Modul (10) gesteuert wird, um mindestens eine Gabel (50) des ersten beweglichen Moduls in Gabeln eines Transportgestells einzuführen, wobei das Transportgestell angepasst ist, um das Flugzeugelement (80) aufnehmen zu können, dann
- das zweite bewegliche Modul (20) gesteuert wird, um mindestens eine Gabel (51) des zweiten beweglichen Moduls in die Gabeln des Transportgestells einzuführen,
- der Rahmen des ersten Moduls und der Rahmen des zweiten beweglichen Moduls mittels mindestens eines Verbindungsarms (16, 17, 18, 19) fest miteinander verbunden werden, dann
- das erste bewegliche Modul und das zweite bewegliche Modul auf untereinander koordinierte Weise gesteuert werden,
- das Flugzeugelement (80) mittels der Hebevorrichtung von jedem beweglichen Modul mindestens in einer vertikalen Richtung bewegt wird.

15. Verfahren nach Anspruch 14, wobei nach Bewegen des Flugzeugelements (80) mindestens in einer vertikalen Richtung mittels der Hebevorrichtung Zylinder (61, 62, 63) zur Flexibilität einer Hebevorrichtung von jedem beweglichen Modul (10, 20) ausgefahren werden.

## Claims

1. A movable carriage system (1) for moving an aircraft element (80) which is an airplane engine, said system comprising:
- a first movable module (10) and a second movable module (20), each movable module (10, 20) mainly extending along a longitudinal axis and comprising:
∘ a frame (12, 22) equipped with at least three wheels (32, 33, 35, 36, 42, 44),
∘ a lifting device (55) adapted to be able to move said aircraft element (80) at least in a vertical direction, the lifting device (55) of each movable module (10, 20) comprising at least one fork (50, 51) extending in a transverse direction, orthogonal to the longitudinal axis of each module (10, 20),
∘ at least one linking arm (16, 17, 18, 19) adapted to be able to secure the frame of said first module and the frame of said second module to one another,
**characterized in that** the first movable module (10) and the second movable module (20) are adapted to be able to be controlled and moved independently of one another, and simultaneously coordinated with one another when they are secured to one another using at least one linking arm (16, 17, 18, 19), and the lifting device (55) of each movable module (10, 20) being adapted to be able to move the aircraft element (80) vertically and by an incline relative to a lifting plane orthogonal to said vertical direction.

2. The system according to claim 1, wherein each movable module (10, 20) comprises a longitudinally extending rail (58), the fork (50, 51) of each movable module (10, 20) being attached to the rail (58) of said movable module (10, 20) through an attachment device (52, 53), on each movable module (10, 20) the fork (50, 51) and the attachment device (52, 53) are mounted sliding in translation along the rail (58).

3. The system according to claim 2, wherein each attachment device (53, 57) for attachment to the rail (58) also comprises a stop rocker (101) that is operated by means of a stop lever (102).

4. The system according to one of claims 1 to 3, wherein each fork (50, 51) includes at least one bearing pad (503).

5. The system according to claim 4, wherein each bearing pad (503) includes a system for adjusting the spatial orientation of the bearing pad (503) along at least one axis.

6. The system according to one of claims 1 to 5, wherein each movable module (10, 20) comprises at least two jacks (61, 62, 63), called flexible jacks, each flexible jack being associated with at least one ball bearing plate (112) so as to allow at least one translational movement of said aircraft element in a horizontal plane, substantially orthogonal to said vertical direction, in relation to each movable module.

7. The system according to one of claims 1 to 6, wherein the lifting device (55) comprises a scissor lifting device activated using two lifting jacks.

8. The system according to one of claims 1 to 7, wherein the lifting device (55) includes at least one lifting jack.

9. The system according to one of claims 1 to 8, wherein at least the first movable module (10) includes:
- a linking cable (1000) configured to be connected to the second movable module (20), and
- means for managing the storage and deployment of the linking cable (1000).

10. The system according to one of claims 1 to 9, wherein the linking arm (16, 17, 18, 19) of at least one movable module (10, 20) comprises a communication cable (70) adapted to allow data to be transferred between the first movable module and the second movable module, and each linking arm (16, 17) extends in a transverse direction, orthogonal to said longitudinal direction of said movable module.

11. The system according to one of claims 1 to 10, wherein each linking arm (16, 17) is linked to at least one of said first movable module (10) and said second movable module (20) by a pivot link.

12. The system according to one of claims 1 to 11, which comprises two linking arms (16, 17, 18, 19), a first linking arm (16) being attached to the frame of said first movable module (10) and a second linking arm (17) being attached to the frame of said second movable module (20).

13. The system according to one of claims 1 to 12, wherein the frame (12, 22) of each movable module (10, 20) is equipped with at least two motorized wheels (32, 33, 35, 36).

14. A method for implementing a system according to one of claims 1 to 13, in said method:
- said first movable module (10) is controlled so as to insert at least one fork (50) of said first movable module into sleeves of a transport jig, said transport jig being adapted to be able to receive said aircraft element (80), then
- said second movable module (20) is controlled so as to insert at least one fork (51) of said second movable module into the sleeves of said transport jig,
- the frame of said first module and the frame of said second movable module are secured to one another using at least one linking arm (16, 17, 18, 19), then
- said first movable module and said second movable module are controlled in a mutually coordinated manner,
- said aircraft element (80) is moved at least in a vertical direction using the device for lifting each movable module.

15. The method according to claim 14, wherein, after having moved said aircraft element (80) at least in a vertical direction using said lifting device, flexible jacks (61, 62, 63) of a lifting device of each movable module (10, 20) are deployed.
